# EUROPEAN PATENT APPLICATION

(11) **EP 2 587 826 A1**
(43) Date of publication of application: **01.05.2013**
(21) Application number: 10851290.6
(22) Date of filing: 29.10.2010
(51) Int. Cl.: H04N 21/258, H04N 21/45

(54) **EXTRACTION AND ASSOCIATION METHOD AND SYSTEM FOR OBJECTS OF INTEREST IN VIDEO**

(71) Applicant: Huawei Technologies Co., Ltd., Shenzhen, Guangdong 518129 (CN); Peking University, Beijing 100871 (CN)
(72) Inventor: TIAN, Yonghong, Beijing 100871 (CN); YU, Haonan, Beijing 100871 (CN); LI, Jia, Beijing 100871 (CN); GAO, Yunchao, Shenzhen Guangdong 518129 (CN); ZHANG, Jun, Shenzhen Guangdong 518129 (CN); YAN, Jun, Shenzhen Guangdong 518129 (CN)
(74) Representative: Epping, Wilhelm
(86) International application number: PCT/CN2010/078239
(87) International publication number: WO 2011/140786

(57) **Abstract**

The present invention relates to an image and video processing method, and in particular, to a two-phase-interaction-based extraction and association method for an object of interest in a video. In the method, a user performs coarse positioning interaction by an interactive method which is not limited to a normal manner and has a low requirement for prior knowledge; based on this, a certain extraction algorithm which is fast and easy to implement is adopted to perform multi-parameter extraction on the object of interest. Base on a most suitable object of interest which is obtained from reselection interaction, the method obtains a final result by extracting various features to perform searching and weighting; corresponding images and supplementary information are extracted from a value-added information base, and finally the information is presented at a periphery of the video. In the method, on the basis of mining video information fully and ensuring user preference, in a manner where the viewing of the user is not affected, associate value-added information with the object which the user is interested in, thereby meeting the user's requirement for deeply knowing and further exploring an attention area.

## Description

### FIELD OF THE INVENTION

The present invention relates to the field of image and video processing, and in particular, to a method and a system for extraction and association of a video object.

### BACKGROUND OF THE INVENTION

With the development of multimedia technologies and network communication technologies, more and more videos emerge on the Internet, and a demand for playing a video increases rapidly. When the video is played, many video websites and video software adopt a technology for providing relevant supplementary information for the video so that a user obtains a strengthened viewing experience. At present, a common method for strengthening a video content focuses on providing value-added information previously defined by a video maker, which includes:

Time-domain information insertion: It indicates that a section of extra relevant information is played at buffering at the beginning, pausing in the middle, or an end of the video.

Peripheral information association: It indicates that the value-added information is presented at a periphery of a video player (such as a web page, and a border of the player) when the video is played.

Overlapping information association: It indicates that supplementary information is overlapped on a part of the content of the video, and usually a main part is not affected.

Character information association: It indicates that the video is linked in a text, and different texts trigger different videos.

At present, the four methods for strengthening the video content are widely applied. Youku (www.youku.com) and Youtube (www.youtube.com), and so on, mainly use the first and the third methods, while Tudou (www.tudou.com) mainly uses the second method, and the fourth method is adopted by Vibrant Media (www.vibrantmedia.com). However, effects of these methods are usually not ideal, because they produce interference in normal viewing of the user. And information provided by these manners is usually in a relatively low association degree with the video content, thereby being easily ignored by the user.

To strengthen the association degree between the value-added information and the video content, the prior art tires to provide information which is relevant to the video content through video content automatic analyzing or user interaction. For example:

There is a method where the user is allowed to select an advertisement so as to browse advertisement value-added information stored in a cache. A prerequisite of this method is that the relevant advertisement is provided for a specific video in advance, which has certain limitation, and flexibility of the provided advertisement is not high.

A server searches the advertisement which is associated with a label according to the label of the video, and selects one or more advertisements from the searched advertisements to insert it or them into a designated position of the video content. However, the video label cannot precisely describe the content which the user is interested in and which is in the video. The provided advertisement, although with a consistent general direction, most of the time belongs to the scope which the user is not interested in.

Limitation of the foregoing method may be concluded as several points in the following:

The association degree between the value-added information and the video content that are provided in the existing method is low; the value-added information provided by automatic analysis has no user personalization, and cannot meet user preference.

### SUMMARY OF THE INVENTION

To overcome the foregoing shortcomings, embodiments of the present invention provide a method and a system for extraction and association of an object of interest in a video. An object which a user is interested in can be obtained through directly performing interaction on a video content. And then relevant value-added information is obtained through the association of the object of interest to strengthen viewing experience of the video. Through this manner, the user makes a selection according to interests of the user in a non-compelled (non-compelled) prerequisite, thereby fully mining the information of the video, and further providing a new video browsing and experience manner for the user.

An embodiment of the present invention provides an extraction and association method for an object of interest in a video, where the method includes:
generating an attention degree parameter according to a position of point obtained in a coarse positioning process, where the attention degree parameter is used to indicate an attention degree of each area in a video frame;
identifying a foreground area according to the attention degree of each area in the video frame;
performing convex hull processing on the foreground area to obtain candidate objects of interest, and determining an optimal candidate object of interest according to a user reselection result; and extracting a visual feature of the optimal candidate object of interest, searching out an optimal image in an image feature base according to the visual feature, matching out value-added information which corresponds to the optimal image in a value-added information base, and presenting the matched value-added information to the user.

An embodiment of the present invention provides a two-phase-interaction-based extraction and association system for an object of interest in a video, where the system includes:
a basic interaction module, configured to provide a position of point which is obtained according to a coarse positioning process;
an object of interest extraction module, configured to generate an attention degree parameter according to the position of point provided by a user in the coarse positioning process, where the attention degree parameter is used to indicate an attention degree of each area in a video frame, identify a foreground area according to the attention degree of each area in the video frame, and perform convex hull processing on the foreground area to obtain candidate objects of interest;
an extending interaction module, configured to determine an optimal candidate object of interest according to a user reselection result; and
a value-added information searching module, configured to extract a visual feature of the optimal candidate object of interest, search out an optimal image in an image feature base according to the visual feature, match out value-added information which corresponds to the optimal image in a value-added information base, and present the matched value-added information to the user.

The embodiments of the present invention provides for the user an interaction apparatus which is not limited to a normal manner. In a randomly given video, the user may select the object of interest through simple interaction and search relevant value-added information, and finally a final result is presented in a prerequisite that the viewing of the user is not affected, so as to facilitate the user's further knowing and exploring the video content that the user is interested in. The association degree between the value-added information and the video content that are provided in the embodiments of the present invention is high; the user preference is met through the interaction so that a personalized service may be provided for the user; and an interaction method has a wide application scene, is simple, and needs no prior knowledge.

### BRIEF DESCRIPTION OF THE DRAWINGS

To illustrate the technical solutions in the embodiments of the present invention or in the prior art more clearly, the accompanying drawings required for describing the embodiments or the prior art are introduced briefly in the following. Apparently, the accompanying drawings in the following descriptions are merely some of the embodiments of the present invention, and persons of ordinary skill in the art can further derive other drawings according to these accompanying drawings without creative efforts.
FIG. 1 is an effect diagram of an extraction and association method for an object of interest in a video according to an embodiment of the present invention;
FIG. 2 is a flow chart of an extraction and association method for an object of interest in a video according to an embodiment of the present invention;
FIG. 3 is a flow chart of another extraction and association method for an object of interest in a video according to an embodiment of the present invention;
FIG. 4 is a flow chart of a method for extracting an object of interest according to an embodiment of the present invention;
FIG. 5 is an effect diagram of extraction of candidate objects of interest according to an embodiment of the present invention;
FIG. 6 is a flow chart of a method for searching value-added information according to an embodiment of the present invention;
FIG. 7 is an architectural diagram of a two-phase-interaction-based extraction and association system for an object of interest in a video;
FIG. 8 is a module diagram of a two-phase-interaction-based extraction and association system for an object of interest in a video;
FIG. 9 is an example diagram of association effect of value-added information in a video.

### DETAILED DESCRIPTION OF THE EMBODIMENTS

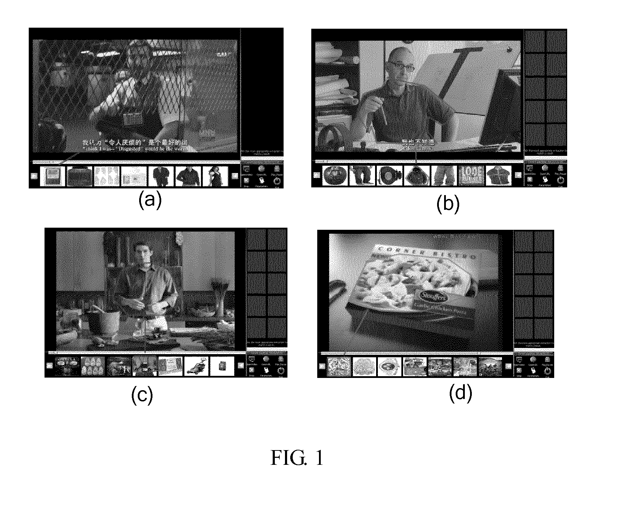

FIG. 1 shows an effect diagram of an extraction and association method for an object of interest in a video according to an embodiment of the present invention. Each aspect of the present invention is described in detail in the following through specific embodiments and with reference to accompanying drawings.

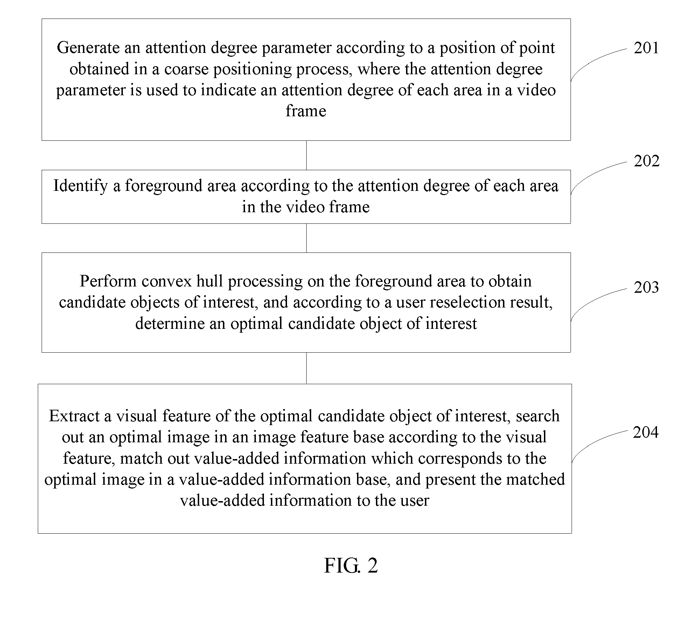

What is shown in FIG. 2 is an extraction and association method for an object of interest in a video according to an embodiment of the present invention, where the method includes:
Step 201: Generate an attention degree parameter according to a position of point obtained in a coarse positioning process, where the attention degree parameter is used to indicate an attention degree of each area in a video frame;
Step 202: Identify a foreground area according to the attention degree of each area in the video frame;
Step 203: Perform convex hull processing on the foreground area to obtain candidate objects of interest, and according to a user reselection result, determine an optimal candidate object of interest; and
Step 204: Extract a visual feature of the optimal candidate object of interest, search out an optimal image in an image feature base according to the visual feature, match out value-added information which corresponds to the optimal image in a value-added information base, and present the matched value-added information to the user.

The embodiment of the present invention provides for the user an interaction apparatus which is not limited to a normal manner, where in a randomly given video, the user may select the object of interest through simple interaction and search relevant value-added information, and finally a final result is presented in a prerequisite that the viewing of the user is not affected, so as to facilitate the user's further knowing and exploring the video content that the user is interested in. The association degree between the value-added information and the video content that are provided in the embodiments of the present invention is high; the user preference is met through the interaction so that a personalized service may be provided for the user; and an interaction method has a wide application scene, is simple, and needs no prior knowledge.

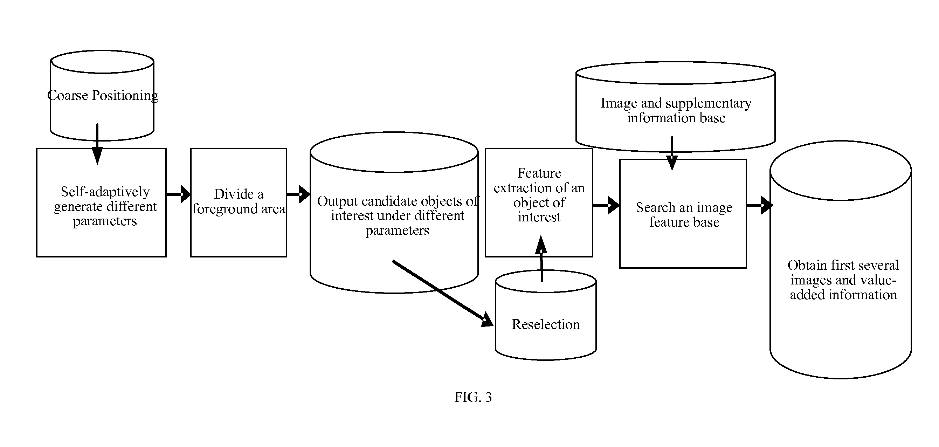

What is shown in FIG. 3 is a flow chart of an extraction and association method for an object of interest in a video according to an embodiment of the present invention. An attention degree parameter is generated according to a position of point obtained in first interaction of coarse positioning, where the attention degree parameter corresponds to an attention degree of each area in a video frame, and then a foreground area is divided to be processed to obtain candidate objects of interest. A user selects satisfied candidate objects of interest (may be one or more, which is not limited by the embodiment of the present invention) from the candidate objects of interest. And the system extracts various features (specifically, may be a video feature) of the selected object, searches an image feature base to obtain similarity of each feature, and weights matching degree. Finally, several optimal images and supplementary information are selected as value-added information and provided for the user. Specifically, in the embodiment of the present invention, a two-phase-interaction-based manner is adopted, that is, a coarse positioning process and reselection. The coarse positioning process and the reselection use a convenient method for interacting with a video content, which may be applied in a scene with relatively little limitation, such as three-dimensional infrared interaction, and mouse interaction. Preferentially, infrared positioning interaction is adopted in this embodiment.

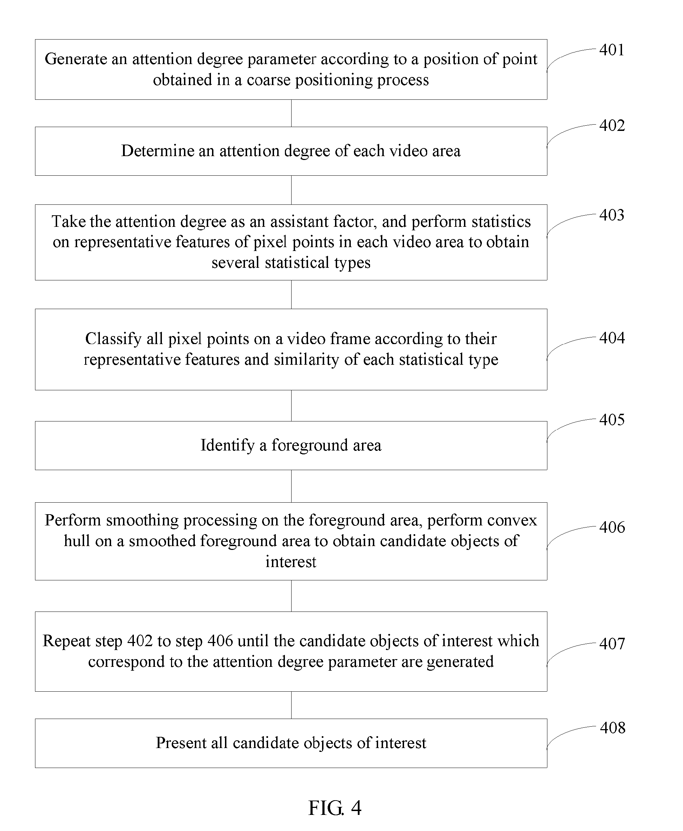

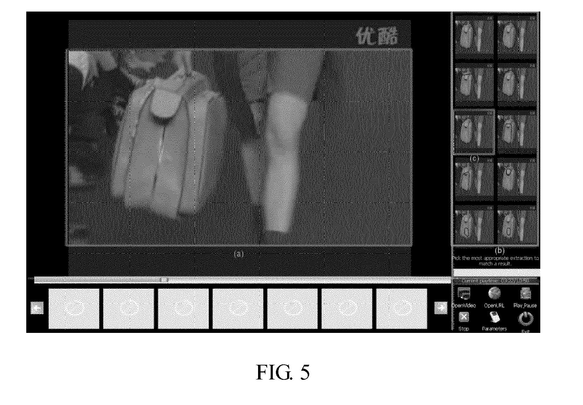

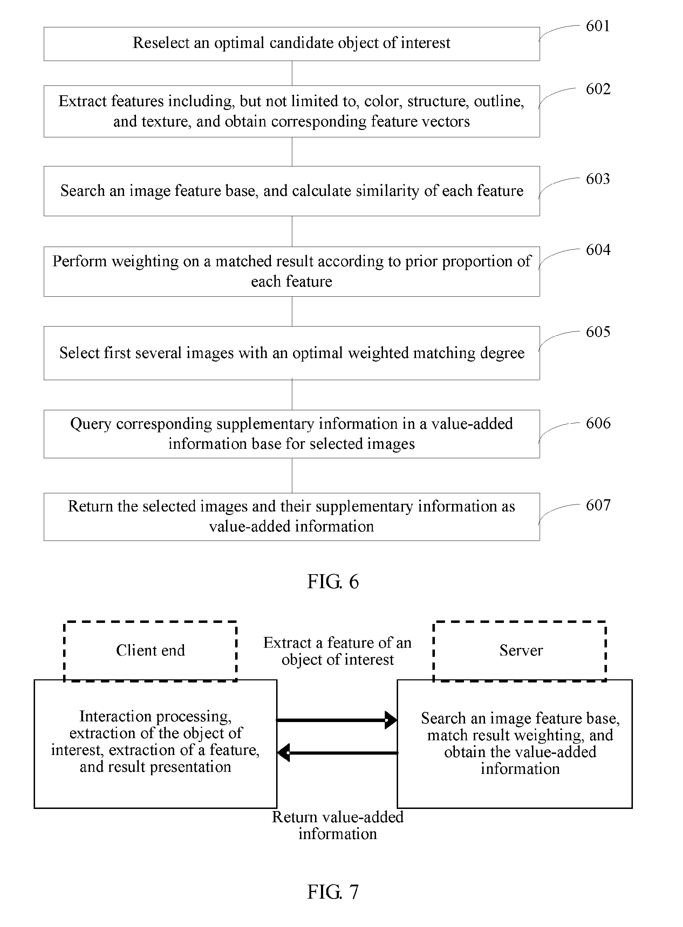

Main steps of a flow chart (FIG. 4) of a two-phase-interaction-based method for extracting an object of interest according to an embodiment of the present invention are as follows:
Step 401: Generate an attention degree parameter according to a position of point obtained in a coarse positioning process.
   Specifically, in the coarse positioning process, the position of point may be obtained through adopting a manner of three-dimensional infrared interaction or mouse interaction, and a video feature is further combined to generate the attention degree parameter. In an embodiment, the video feature may be a video size, and the attention degree parameter is generated by adopting a self-adaptive algorithm and according to the video size and a corresponding position of point. The method for obtaining the position of point by adopting the manner of three-dimensional infrared interaction or mouse interaction specifically is: through mouse clicking, recording a user interaction position so as to obtain the position of point; or, through an infrared three-dimensional positioning apparatus, obtaining a user interaction coordinate in a three-dimensional space, so as to obtain the position of point which corresponds to the interaction position of the user.
Step 402: Divide a video frame into several areas, map the attention degree parameter to each video area, and determine an attention degree of each video area.
   Each group of parameters divides the video frame into several areas, and determines the attention degree of each area. Specifically, the attention degree parameter may represent a series of frames to divide the video frame, and preferentially, the attention degree may be divided into three levels of 1.0, 0.5, and 0.
Step 403: Take the attention degree as an assistant factor, perform statistics on representative features of pixel points in each video area, so as to obtain several statistical types.
   Specifically, the attention degree acts as the assistant factor for establishing a statistical data structure, and a statistical object of the statistical data structure is the representative feature of each pixel point on the video frame. In a specific embodiment, the representative feature may be a CIE-LAB color feature.
Step 404: Classify all pixel points on the video frame according to their representative features and similarity of each statistical type.
   Specifically, the similarity of each statistical type may be obtained through multiple calculation manners, such as Euler distance of feature space, which is not limited in the embodiment of the present invention.
Step 405: After each pixel point is classified, the video area with the highest attention degree acts as a foreground area, that is, an area of interest.
Step 406: Perform smoothing processing on the foreground area, and perform convex hull processing on the smoothed foreground area to obtain candidate objects of interest.
   It should be noted that, in the embodiment of the present invention, a smoothing processing algorithm and a convex hull algorithm are not limited, and multiple video smoothing processing and convex hull algorithms in the prior art may be adopted.
   It should be also noted that, the performing the smoothing processing on the foreground area is an optional step. The area of interest is performed smoothing processing, thereby extending a convex hull border and preserving an edge feature of an original video frame, so as to improve the accuracy of feature extraction of the object of interest in a candidate step.
Step 407: Repeat step 402 to step 406 until the candidate objects of interest which correspond to the attention degree parameter are generated.
Step 408: Present all the candidate objects of interest.
   After the candidate objects of interest are generated, the generated candidate objects of interest are presented to the user at this time. In the embodiment of the present invention, the effect of extraction of the candidate objects of interest is shown in FIG. 5.
   Main steps of a flow chart (FIG. 6) of searching an object of interest according to an embodiment of the present invention are as follows:
Step 601: Reselect an optimal candidate object of interest.
   Specifically, the optimal candidate object of interest in step 601 should be capable of reflecting user preference and well separating a foreground part and a background part. Preferentially, a score of the candidate object of interest is defined as a result obtained by subtracting an area of the candidate object of interest outside an actual object of interest from an area of the candidate object of interest inside the actual object of interest, so that the score is the highest when, and only when, the area of the candidate object of interest just overlaps the actual object of interest, that is, the optimal candidate object of interest is obtained.
Step 602: Extract features including, but not limited to, color, structure, outline, and texture, and obtain corresponding feature vectors.
   The features in step 602 try to reflect the feature of a video frame from multiple angles and multiple levels, such as global and local, color and texture. In the listed example, a space representation method of the color can well represent a color feature of an image, and HSV (hue, saturation, value; hue, saturation, value) color space is preferentially adopted. An outline and a texture feature can effectively resist noise interference, such as a sift feature. A structure feature refers to extracting key points of the image so as to obtain a structure between the key points. In an embodiment, the foregoing structure feature is generated through extracting an invariant robust to scale transformation, rotation, translation, noise adding, color and brightness changes. Preferentially, in the case that the effects of multiple methods differ not much, a method with a fast speed and simple coding is adopted to perform extraction of the foregoing feature.
   In this step, a method for obtaining a feature vector of each feature is as follows:
   a color feature: performing statistics to form a color histogram of objects of interest in a given color space to obtain a color feature vector, where the color feature adopts the space representation method. Specifically, a space identification method which well reflects color distribution of the image may be adopted.
   a structure feature: through a key point extraction algorithm, obtaining a structure feature vector of the object of interest. The structure feature specifically is calculating a surface feature with high robustness for changes such as rotation, scale transformation, translation, noise adding, color, and brightness, through investigating a structure numerical relationship between local features of the image.
   a texture feature: extracting texture of the object of interest through Gabor transformation to obtain a texture feature vector, and
   an outline feature: through a trace transformation algorithm, extracting a line which forms the object of interest to obtain an outline feature vector.
Step 603: Search an image feature base, and calculate similarity of each feature.
   For different features, different calculation methods may be adopted for a similarity calculation process, such as histogram intersection and Euler distance, may be adopted according to.
Step 604: Perform weighting on a matched result according to prior proportion of each feature.
   It should be noted that, this step is an optional step, the present invention emphasizes multiple features weighting, and therefore it is unnecessary to increase calculation complexity and sacrifice overall efficiency of searching in order to improve matching accuracy of a single feature. The proportion of weighting of each feature is determined by prior knowledge, and specifically, in an embodiment provided in the present invention, all features have a same proportion.
Step 605: Select first several images with an optimal weighted matching degree.
Step 606: Query corresponding supplementary information in a value-added information base for selected images.
Step 607: Return the selected images and their supplementary information as value-added information.

It should be noted that, the value-added information includes as much information of this result image as possible. In an embodiment, the result image acts as an advertisement logo, and the value-added information includes a product name, old and new prices, evaluation, inventory, and a site link.

To be compatible with the user's video watching and searching process, and quicken a searching speed, the searching process performs parallel processing. Preferentially, in this embodiment, client-server architecture is adopted to perform process from step 603 to step 607. As shown in FIG. 7, the client-server architecture is briefly illustrated in this embodiment: interaction processing, object of interest extraction, feature extraction, and result presenting are performed at a client end. When feature matching is to be performed, the extracted feature is submitted to a server end. In this way, the user may continue to enjoy smooth video while the searching is parallel performed. After the searching is completed, the server end returns the value-added information.

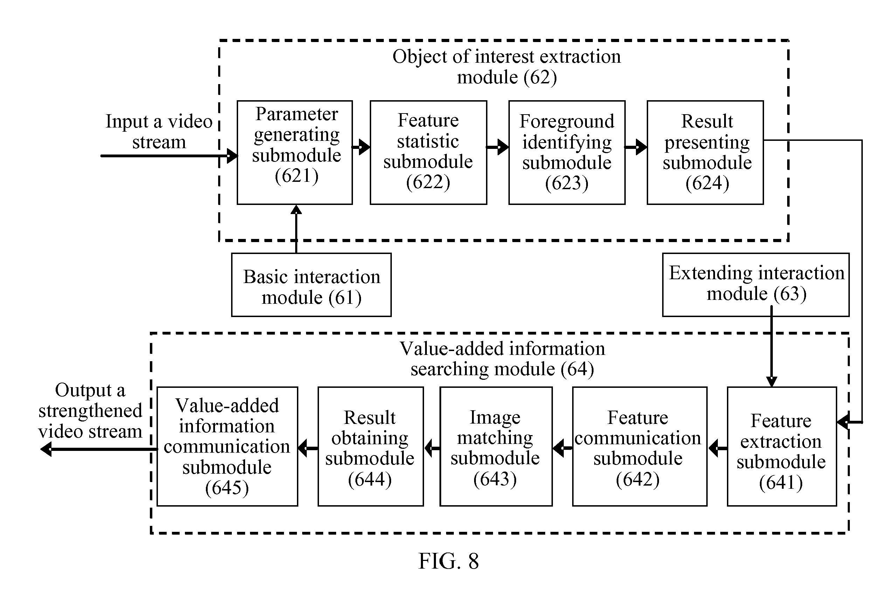

What is shown in FIG. 8 is an extraction and association system for an object of interest in a video according to an embodiment of the present invention, where the system includes:
a basic interaction module 61, configured to provide a position of point obtained according to a coarse positioning process;
an object of interest extraction module 62, configured to generate an attention degree parameter according to the position of point which is provided by the user in the coarse positioning process, where the attention degree parameter is used to indicate the attention degree of each area in a video frame, identify a foreground area according to the attention degree of each area in the video frame, and perform convex hull processing on the foreground area to obtain candidate objects of interest;
an extending interaction module 63, configured to determine an optimal candidate object of interest according to a user reselection result; and
a value-added information searching module 64, configured to extract a visual feature of the optimal candidate object of interest, search out an optimal image in an image feature base according to the visual feature, match out value-added information which corresponds to the optimal image in a value-added information base, and present the matched value-added information to the user.

Further, the object of interest extraction module 62 includes:
a parameter generating submodule 621, configured to generate the attention degree parameter according to the position of point obtained in the coarse positioning process;
a feature statistic submodule 622, configured to perform statistics on a representative feature of a pixel point in an area which is relevant to the attention degree parameter in the video frame according to the attention degree parameter;
a foreground identifying submodule 623, configured to classify all pixel points on the video frame according to their representative features and similarity of each statistical type, and after each pixel point is classified, take a video area with a highest attention degree as the foreground area; and
an object extraction submodule 624, configured to extract the object of interest from the foreground area by using a convex hull algorithm.

The value-added information searching module 64 includes the following submodules:
a feature extraction submodule 641, configured to extract a visual feature to be matched of the optimal candidate object of interest;
a feature communication submodule 642, configured to pass a searching feature between a server end and a client end;
an image matching submodule 643, configured to search an image feature base, calculate similarity of each visual feature, and select an image with the highest similarity as the optimal image;
a result obtaining submodule 644, configured to match out value-added information which corresponds to the optimal image in the value-added information base; and a value-added information communicating submodule 645, configured to pass the value-added information between the server end and the client end.

An extraction and association system module (FIG. 8) for the object of interest in the video according to the embodiment of the present invention has the following data flow manner (indicated by arrows): firstly, a video stream enters the parameter generating submodule (621) accompanying with a position of point flow which is of coarse positioning and is generated by the basic interaction module (61), and generates different parameters self-adaptively, and then separately flows through the feature statistic submodule (622) and the foreground identifying submodule (623) to obtain a set of foreground pixel points; the set is then input into the result presenting submodule (624), and is output to the system after smoothing and convex hull is performed. After a reselection signal stream generated by the extending interaction module (63) selects proper candidate objects of interest, a result is selected to input into the feature extraction submodule (641) to extract various features. A feature data stream is sent to the image matching submodule (643) by the feature communication submodule (642). And after searching, a weighted matching value data stream is sent to the result obtaining submodule (644) to query according to a weighted value. In the end, a corresponding image and supplementary information are output to the user through the value-added information communication submodule (645), and act as a value-added video stream together with a current video stream.

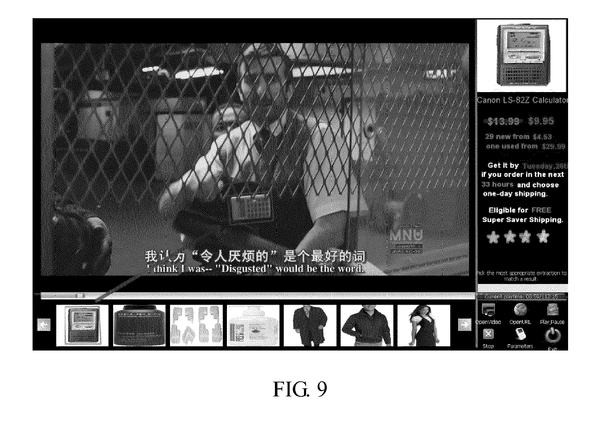

After all work is completed and the value-added information is provided, the user may select a value-added image to browse relevant information, as shown in FIG. 9. An effect example diagram of an embodiment is shown in FIG. 2.

Although specific implementation manners of the present invention are illustrated somewhere in the foregoing description, persons skilled in the art should understand that, these specific implementation manners are merely examples for description. Persons skilled in the art may make various omissions, replacements, and modifications to details of the foregoing method and system without departing from the principles and essence of the present invention. For example, a manner where steps of the foregoing methods are combined and a substantially same function is executed according to a substantially same method to implement a substantially same result belongs to the scope of the present invention. Therefore, the scope of the present invention is only limited by the appended claims.

Persons skilled in the art may clearly understand that the present invention may be accomplished through a manner of software plus a necessary and commonly-used hardware platform. Based on such understanding, the essence of the technical solution of the present invention or the part that makes contributions to the prior art can be embodied in the form of a software product. The computer software product may be stored in a storage medium, such as a ROM/RAM, a magnetic disk, or an optical disk, and includes several instructions which are used to make a computer equipment (may be a personal computer, a server, or a network device, and so on) perform the method as described in each embodiment or some parts of the embodiments of the present invention.

The foregoing descriptions are merely specific implementation manners of the present invention, but not intended to limit the protection scope of the present invention. Any variation or replacement which may be easily thought of by persons skilled in the art within the technical scope disclosed in the present invention should all fall within the protection scope of the present invention. Therefore, the protection scope of the present invention should be subject to the protection scope of the claims.

## Claims

1. An extraction and association method for an object of interest in a video, wherein the method comprises:
generating an attention degree parameter according to a position of point obtained in a coarse positioning process, wherein the attention degree parameter is used to indicate an attention degree of each area in a video frame;
identifying a foreground area according to the attention degree of each area in the video frame;
performing convex hull processing on the foreground area to obtain candidate objects of interest, and determining an optimal candidate object of interest according to a user reselection result; and
extracting a visual feature of the optimal candidate object of interest, searching out an optimal image in an image feature base according to the visual feature, matching out value-added information which corresponds to the optimal image in a value-added information base, and presenting the matched value-added information to the user.

2. The extraction and association method for the object of interest in the video according to claim 1, wherein the obtaining the position of point in the coarse positioning process comprises:
through mouse clicking, recording the position of point which corresponds to a user interaction position; or,
through an infrared three-dimensional positioning apparatus, obtaining a user interaction coordinate in a three-dimensional space so as to obtain the position of point which corresponds to the interaction position of the user.

3. The extraction and association method for the object of interest in the video according to claim 1, wherein after the generating the attention degree parameter according to the position of point obtained in the coarse positioning process, the method further comprises:
dividing the video frame into several areas, and mapping the attention degree parameter to each video area.

4. The extraction and association method for the object of interest in the video according to claim 3, wherein the identifying the foreground area according to the attention degree of each area in the video frame comprises:
according to the attention degree parameter, performing statistics on a representative feature of a pixel point in an area which is relevant to the attention degree parameter in the video frame;
classifying all pixel points on the video frame according to their representative features and similarity of each statistical type; and
after each pixel point is classified, taking the video area with the highest attention degree as the foreground area.

5. The extraction and association method for the object of interest in the video according to claim 3, wherein in a method for performing statistics on a representative feature, the attention degree parameter acts as an assistant factor for establishing a statistical data structure, and a statistical object of the statistical data structure is the representative feature of a pixel point on the video frame.

6. The extraction and association method for the object of interest in the video according to claim 1, wherein the visual feature comprises at least one of the following:
a color feature: performing statistics to form a color histogram of the optimal candidate object of interest in a given color space to obtain a color feature vector;
a structure feature: through a key point extraction algorithm, obtaining a structure feature vector of the optimal candidate object of interest;
a texture feature: extracting texture of the optimal candidate object of interest through Gabor transformation to obtain a texture feature vector; and
an outline feature: through a trace transformation algorithm, extracting a line which forms the optimal candidate object of interest to obtain an outline feature vector.

7. The extraction and association method for the object of interest in the video according to claim 6, wherein the structure feature specifically is calculating an obtained surface feature with high robustness for changes such as rotation, scale transformation, translation, noise adding, color, and brightness, through investigating a structure numerical relationship between local features of the image.

8. The extraction and association method for the object of interest in the video according to claim 1, wherein the searching out the optimal image in the image feature base according to the visual feature comprises:
searching the image feature base, calculating similarity of each visual feature, and selecting an image with highest similarity as the optimal image.

9. The extraction and association method for the object of interest in the video according to claim 8, wherein the method further comprises: performing weighting on a similarity result obtained through calculating for each visual feature according to prior proportion, and selecting an image with an optimal weighting result as the optimal image.

10. An extraction and association system for an object of interest in a video, wherein the system comprises:
a basic interaction module, configured to provide a position of point obtained according to a coarse positioning process;
an object of interest extraction module, configured to generate an attention degree parameter according to the position of point provided by the user in the coarse positioning process, wherein the attention degree parameter is used to indicate an attention degree of each area in a video frame, identify a foreground area according to the attention degree of each area in the video frame, and perform convex hull processing on the foreground area to obtain candidate objects of interest;
an extending interaction module, configured to determine an optimal candidate object of interest according to a user reselection result; and
a value-added information searching module, configured to extract a visual feature of the optimal candidate object of interest, search out an optimal image in an image feature base according to the visual feature, match out value-added information which corresponds to the optimal image in a value-added information base, and present the matched value-added information to the user.

11. The extraction and association system for the object of interest in the video according to claim 10, wherein the object of interest extraction module comprises:
a parameter generating submodule, configured to generate the attention degree parameter according to the position of point obtained in the coarse positioning process;
a feature statistic submodule, configured to perform statistics on a representative feature of a pixel point in an area which is relevant to the attention degree parameter in the video frame according to the attention degree parameter;
a foreground identifying submodule, configured to classify all pixel points on the video frame according to their representative features and similarity of each statistical type, and after each pixel point is classified, take a video area with highest attention degree as the foreground area; and
an object extraction submodule, configured to extract objects of interest from the foreground area by using a convex hull algorithm.

12. The extraction and association system for the object of interest in the video according to claim 10, wherein the value-added information searching module comprises the following submodules:
a feature extraction submodule, configured to extract a visual feature to be matched of the optimal candidate object of interest;
a feature communication submodule, configured to pass a searching feature between a server end and a client end;
an image matching submodule, configured to search the image feature base, calculate similarity of each visual feature, and select an image with highest similarity as the optimal image;
a result obtaining submodule, configured to match out the value-added information which corresponds to the optimal image in the value-added information base; and
a value-added information communication submodule, configured to pass the value-added information between the server end and the client end.
